# EUROPEAN PATENT APPLICATION

(11) **EP 4 134 596 A1**
(43) Date of publication of application: **15.02.2023**
(21) Application number: 20930112.6
(22) Date of filing: 11.11.2020
(51) Int. Cl.: F24F 5/00, F24F 11/46, F24F 11/74

(54) **AIR CONDITIONING SYSTEM**

(30) Priority: 09.04.2020 JP 2020070447
(71) Applicant: MITSUBISHI ELECTRIC CORPORATION, Chiyoda-ku Tokyo 100-8310 (JP)
(72) Inventor: TAMAKI, Shogo, Tokyo 100-8310 (JP); TOMITSUKA, Hiroshi, Tokyo 100-0006 (JP); NISHIMURA, Michio, Tokyo 100-0006 (JP)
(74) Representative: Studio Torta S.p.A.
(86) International application number: PCT/JP2020/042074
(87) International publication number: WO 2021/205684

(57) **Abstract**

There is provided an air conditioning system that can reduce a power consumption while maintaining constant temperature controlling capability. To this end, a water air conditioning system (100) includes a heat source unit (301) to cool water, a utilization heat exchanger (5) to exchange heat between air and the water cooled by the heat source unit (301), a secondary pump (1) to cause the water to flow in the utilization heat exchanger (5), a water temperature sensor (205) to detect a temperature of the water cooled by the heat source unit (301), and airflow volume changing means to increase an airflow volume of the air passing through the utilization heat exchanger (5) when the temperature of the water cooled by the heat source unit (301) becomes higher.

## Description

### Field

The present disclosure relates to an air conditioning system.

### Background

As a utilization unit used for an air conditioning system, a utilization unit that adjusts a fan rotation speed and a damper opening degree of a VAV unit to control a temperature inside a room such that an air supply amount becomes equal to a required air volume for the entire room is known (for example, see PTL 1).

### Citation List

### Patent Literature

[PTL 1] JP H06-313582 A

### Summary

### Technical Problem

In the air conditioning system disclosed in PTL 1, the air supply amount is controlled so as to be constant at the required air volume set corresponding to the maximum indoor load. Therefore, during operation with a low air conditioning load, the air volume becomes excessive, which may increase a wasteful power consumption. Further, during a period with a low load, for example, during an intermediate period, a temperature of heat medium on a heat source side is moderated to a temperature higher than a temperature during the summer in some cases. When the air is supplied such that the air supply amount is constant at the required air volume in such a case, a power consumption of a pump circulating the heat medium on the heat source side may be increased.

The present disclosure is made to solve such issues. An object of the present disclosure is to provide an air conditioning system that can reduce a power consumption while maintaining constant temperature controlling capability.

### Solution to Problem

An air conditioning system according to the present disclosure includes: a heat source machine to cool heat medium; a heat exchanger to exchange heat between air and the heat medium cooled by the heat source machine; a pump to cause the heat medium flowing in the heat exchanger; a temperature sensor to detect a temperature of the heat medium cooled by the heat source machine, and airflow volume changing means to increase an airflow volume of the air passing through the heat exchanger when the temperature of the heat medium cooled by the heat source machine becomes higher.

Or an air conditioning system according to the present disclosure includes: a heat source machine to heat heat medium; a heat exchanger to exchange heat between air and the heat medium heated by the heat source machine; a pump to cause the heat medium flowing in the heat exchanger; a temperature sensor to detect a temperature of the heat medium heated by the heat source machine, and airflow volume changing means to increase an airflow volume of the air passing through the heat exchanger when the temperature of the heat medium heated by the heat source machine becomes lower.

### Advantageous Effects of Invention

The air conditioning system according to the present disclosure makes it possible to reduce the power consumption while maintaining the constant temperature controlling capability.

### Brief Description of the Drawings

Fig. 1 is a diagram illustrating a configuration of a heat medium circuit of an air conditioning system according to Embodiment 1.
Fig. 2 is a diagram illustrating a configuration of an air circuit of the air conditioning system according to Embodiment 1.
Fig. 3 is a block diagram illustrating a configuration of a control system of the air conditioning system according to Embodiment 1.
Fig. 4 is a diagram illustrating relationship of a set outlet water temperature of a heat source unit with power consumptions of the heat source unit and a secondary pump, in the air conditioning system according to Embodiment 1.
Fig. 5 is a diagram illustrating relationship of the set outlet water temperature of the heat source unit with a total power consumption of the heat source unit and the secondary pump, in the air conditioning system according to Embodiment 1.
Fig. 6 is a diagram illustrating relationship of an airflow volume by a fan with power consumptions of the fan and the secondary pump, in the air conditioning system according to Embodiment 1.
Fig. 7 is a diagram illustrating relationship of the airflow volume by the fan with a total power consumption of the fan and the secondary pump, in the air conditioning system according to Embodiment 1.
Fig. 8 is a diagram illustrating relationship of an operation capacity of the fan with an operation frequency of the secondary pump, in the air conditioning system according to Embodiment 1.
Fig. 9 is a flowchart illustrating an example of operation by the air conditioning system according to Embodiment 1.
Fig. 10 is a flowchart illustrating an example of operation to set a rotation speed of the fan by the air conditioning system according to Embodiment 1.
Fig. 11 is a diagram illustrating another example of the heat medium circuit of the air conditioning system according to Embodiment 1.

### Description of Embodiments

Some embodiments of an air conditioning system according to the present disclosure are described with reference to accompanying drawings. In the drawings, the same or equivalent parts are denoted by the same reference numerals, and repetitive descriptions are appropriately simplified or omitted. In the following description, positional relationship of structures is represented based on an illustrated state for convenience. Note that the present disclosure is not limited to the following embodiments, and an arbitrary combination of the embodiments, modification of an optional component in each of the embodiments, or omission of an optional component in each of the embodiments can be made without departing from the spirit of the present disclosure.

### Embodiment 1.

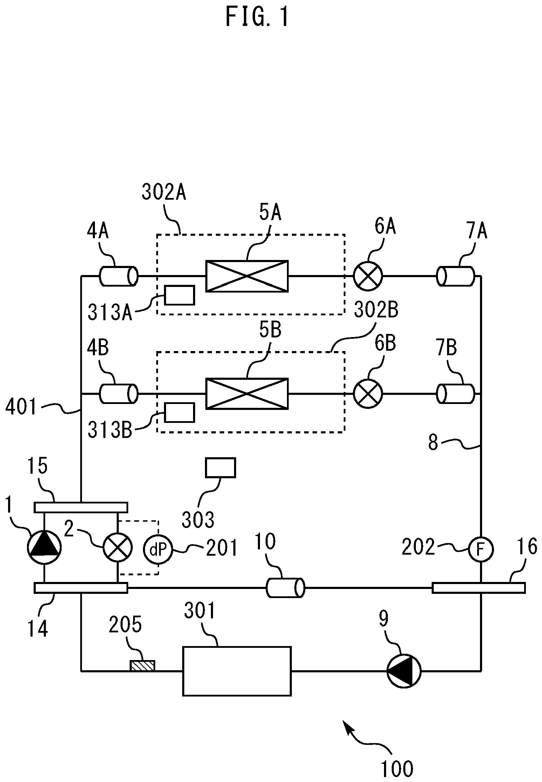

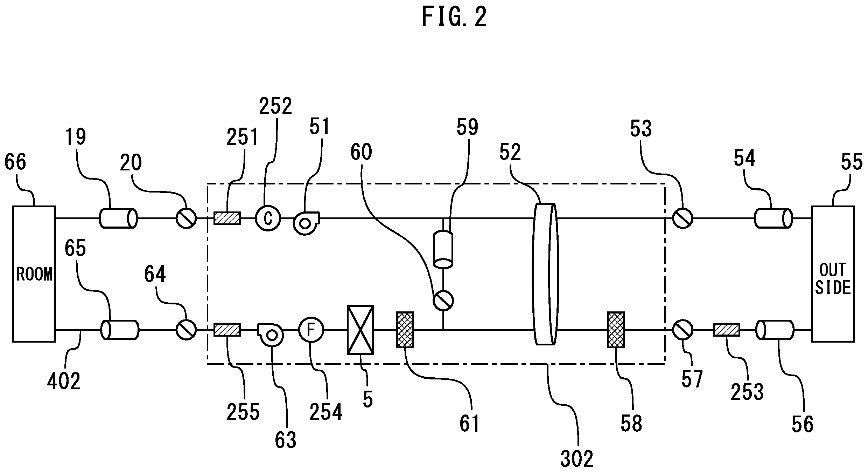

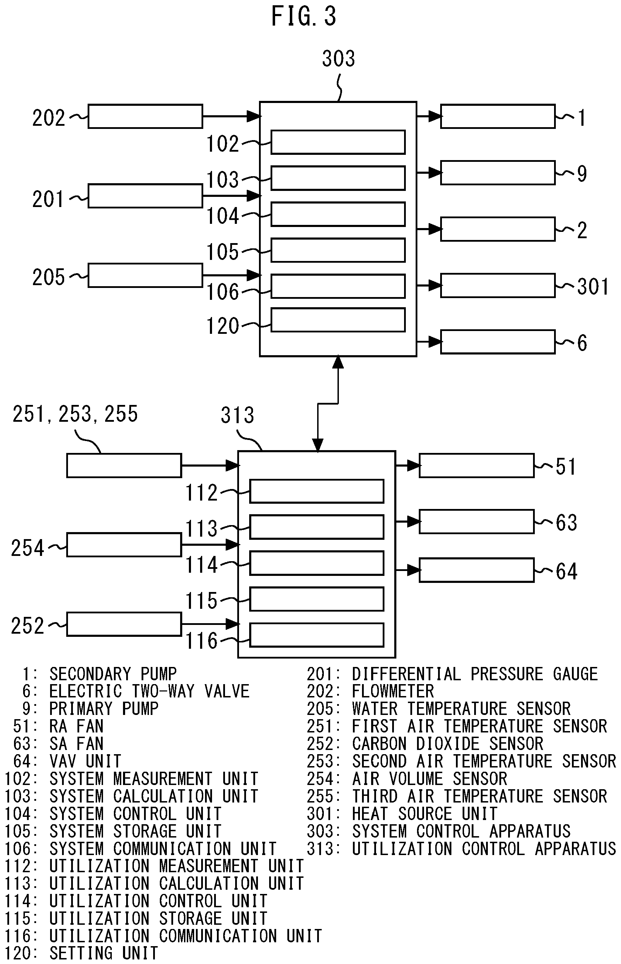

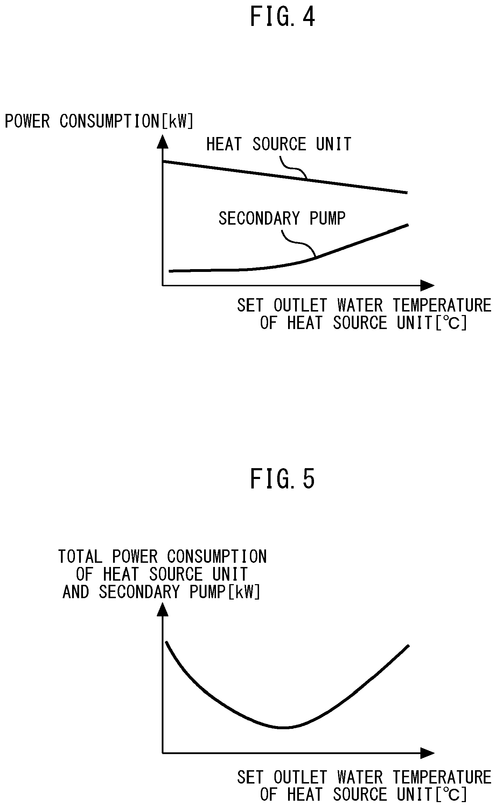

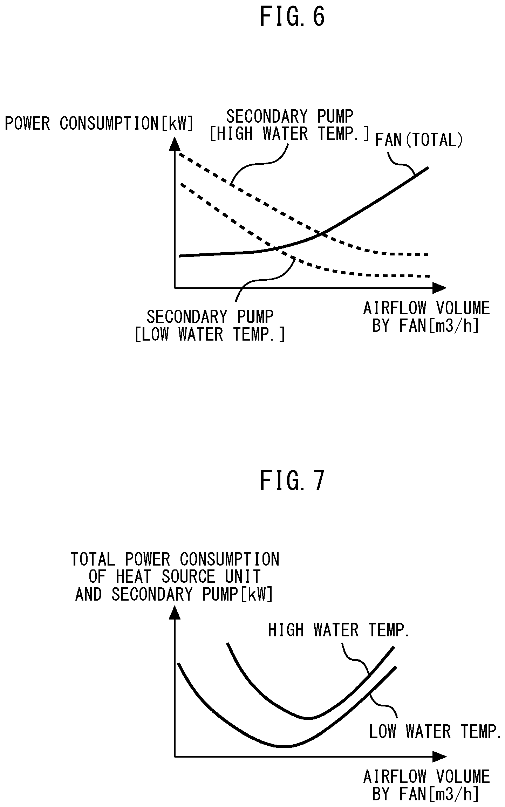

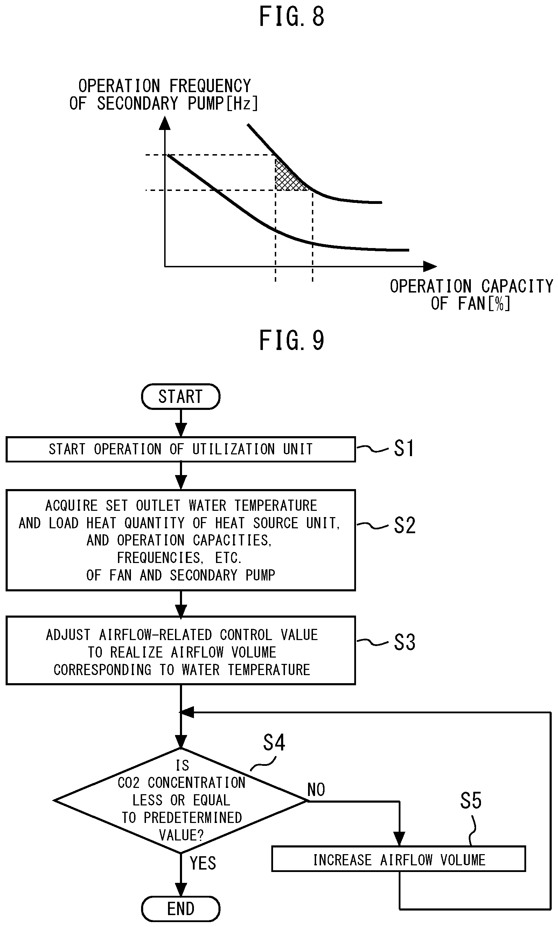

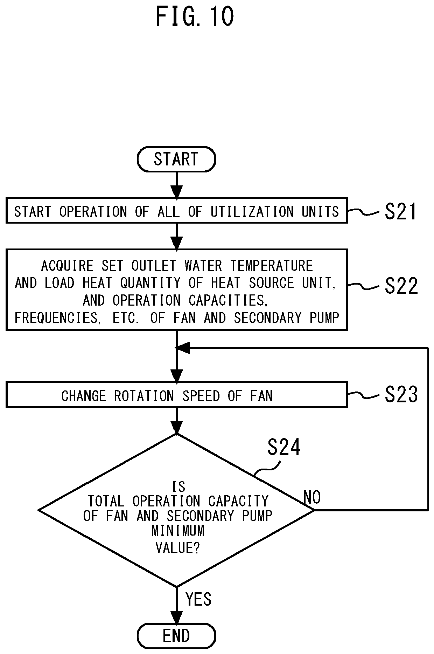

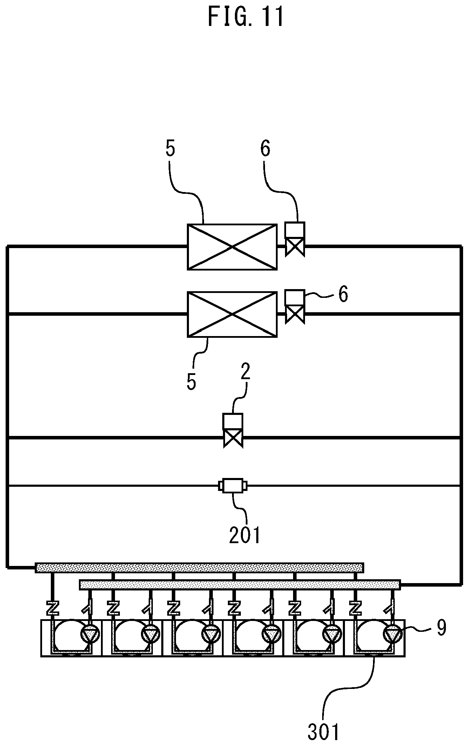

Embodiment 1 of the present disclosure is described with reference to Fig. 1 to Fig. 11. Fig. 1 is a diagram illustrating a configuration of a heat medium circuit of an air conditioning system. Fig. 2 is a diagram illustrating a configuration of an air circuit of the air conditioning system. Fig. 3 is a block diagram illustrating a configuration of a control system of the air conditioning system. Fig. 4 is a diagram illustrating relationship of a set outlet water temperature of a heat source unit with power consumptions of the heat source unit and a secondary pump, in the air conditioning system. Fig. 5 is a diagram illustrating relationship of the set outlet water temperature of the heat source unit with a total power consumption of the heat source unit and the secondary pump, in the air conditioning system. Fig. 6 is a diagram illustrating relationship of an airflow volume by a fan with power consumptions of the fan and the secondary pump, in the air conditioning system. Fig. 7 is a diagram illustrating relationship of the airflow volume by the fan with a total power consumption of the fan and the secondary pump, in the air conditioning system. Fig. 8 is a diagram illustrating relationship of an operation capacity of the fan with an operation frequency of the secondary pump, in the air conditioning system. Fig. 9 is a flowchart illustrating an example of operation by the air conditioning system. Fig. 10 is a flowchart illustrating an example of operation to set a rotation speed of the fan by the air conditioning system. Fig. 11 is a diagram illustrating another example of the heat medium circuit of the air conditioning system.

An air conditioning system according to the present embodiment is a water air conditioning system 100 using water as heat medium. The heat medium used by the air conditioning system is not limited to the water. Brine may be used as the heat medium. The water air conditioning system 100 according to the present embodiment includes a water circuit that is a heat medium circuit through which the water as the heat medium circulates, and an air circuit through which air to be air-conditioned circulates.

Fig. 1 illustrates a configuration on the water circuit side of the water air conditioning system 100 according to the present embodiment. As illustrated in the same drawing, the water air conditioning system 100 includes a heat source unit 301 and a utilization unit 302. The heat source unit 301 is installed in, for example, a rooftop of a building in which the water air conditioning system 100 is installed. The utilization unit 302 is installed in, for example, a machine room of the building in which the water air conditioning system 100 is installed. The number of utilization units 302 included in the water air conditioning system 100 is one or more. In the configuration example described here, the water air conditioning system 100 includes two utilization units including a first utilization unit 302A and a second utilization unit 302B. In the following description, in a case where the first utilization unit 302A and the second utilization unit 302B are not distinguished from each other, the first utilization unit 302A and the second utilization unit 302 B are collectively referred to as "utilization unit 302".

The water air conditioning system 100 according to the present embodiment further includes a primary pump 9, a secondary pump 1, a bypass valve 2, and an electric two-way valve 6. The heat source unit 301, the two utilization units 302, the primary pump 9, the secondary pump 1, the bypass valve 2, and the electric two-way valve 6 are cyclically connected by a water pipe 8 to constitute a water circuit 401. The water pipe 8 is a heat medium pipe through which the water as the heat medium flows.

The heat source unit 301 is an air heat source heat pump. The heat source unit 301 is a heat source machine to heat or cool the water as the heat medium. The water heated or cooled by the heat source unit 301 is discharged from a water outlet of the heat source unit 301. A pipe connected to the water outlet of the heat source unit 301 is connected to a first outgoing header 14. The secondary pump 1 and the bypass valve 2 are connected in parallel between the first outgoing header 14 and a second outgoing header 15.

A pipe connected to the second outgoing header 15 is branched to a first utilization pipe 4A and a second utilization pipe 4B. The first utilization pipe 4A is connected to a first utilization heat exchanger 5A of the first utilization unit 302A. The second utilization pipe 4B is connected to a second utilization heat exchanger 5B of the second utilization unit 302B. In the following description, in a case where the first utilization heat exchanger 5A and the second utilization heat exchanger 5B are not distinguished from each other, the first utilization heat exchanger 5A and the second utilization heat exchanger 5B are collectively referred to as "utilization heat exchanger 5".

A third utilization pipe 7A is connected to a water outlet side of the first utilization heat exchanger 5A of the first utilization unit 302A through a first electric two-way valve 6A. A fourth utilization pipe 7B is connected to a water outlet side of the second utilization heat exchanger 5B of the second utilization unit 302B through a second electric two-way valve 6B. In the following description, in a case where the first electric two-way valve 6A and the second electric two-way valve 6B are not distinguished from each other, the first electric two-way valve 6A and the second electric two-way valve 6B are collectively referred to as "electric two-way valve 6". The electric two-way valve 6 is an electric valve having an opening degree continuously variable.

The third utilization pipe 7A and the fourth utilization pipe 7B are merged and connected to a returning header 16. The returning header 16 is connected to a water inlet of the heat source unit 301 through the pipe. The secondary pump 1 is provided between the returning header 16 and the heat source unit 301. Further, the first outgoing header 14 and the second outgoing header 15 are connected by a bypass pipe 10.

The primary pump 9 and the secondary pump 1 are pumps causing the water to flow in the utilization heat exchanger 5. The primary pump 9 and the secondary pump 1 are centrifugal pumps. The primary pump 9 is turned on or off in response to operation of the heat source unit 301. A rotation speed of the secondary pump 1 is varied by power supplied from an unillustrated inverter. The rotation speed of the secondary pump 1 is varied based on an operation state of the water circuit 401. An opening degree of the bypass valve 2 is controlled based on the operation state of the water circuit 401.

In the configuration example described here, the water air conditioning system 100 includes a differential pressure gauge 201, a flowmeter 202, and a water temperature sensor 205. The differential pressure gauge 201 detects a water supply differential pressure between an input side and an output side of the bypass valve 2. The flowmeter 202 detects a load flow rate of the water returning from the utilization unit 302 side to the returning header 16. The water temperature sensor 205 detects a temperature of the water discharged from the water outlet of the heat source unit 301. In other words, the water temperature sensor 205 is a temperature sensor detecting a temperature of the water heated or cooled by the heat source unit 301.

Fig. 2 illustrates a configuration on the air circuit side of the water air conditioning system 100 according to the present embodiment. The number of air circuits 402 of the water air conditioning system 100 is the same as the number of utilization units 302 included in the water air conditioning system 100.

As illustrated in the same drawing, the air circuit 402 of the water air conditioning system 100 is a circuit circulating air in a room 66 that is a space to be air-conditioned. In the configuration example described here, an outside 55 is included in an air circulation path of the air circuit 402. Accordingly, a part or all of the air in the room 66 is returned to the room 66 after being replaced with the air of the outside 55. In other words, the water air conditioning system 100 according to the present embodiment can perform ventilation of the room 66 at the same time as air conditioning of the room 66. However, the water air conditioning system 100 may only perform air conditioning by circulating the air in the room 66 without performing ventilation of the room 66.

The air circuit 402 includes the utilization unit 302. The utilization unit 302 is, for example, an air handling unit. The utilization unit 302 includes an air passage to discharge return air from the room 66 to the outside 55, and an air passage to supply outside air from the outside 55 into the room 66. These air passages are connected (bypassed) through a bypass duct 59 and a bypass damper 60.

The room 66 includes an unillustrated suction port and an unillustrated blowoff port. The air in the room 66 is supplied from the suction port to the utilization unit 302 through a first duct 19 and a return air damper 20. The air controlled in temperature by the utilization unit 302 is supplied from the blowoff port into the room 66 through a VAV unit 64 and a fourth duct 65. The VAV is an abbreviation for "Variable Air Volume", and indicates a "variable air volume system". The VAV unit 64 includes a damper to change the volume of air passing through the VAV unit 64, and the like.

The indoor air discharged from the utilization unit 302 is discharged to the outside 55 through a discharge air damper 53 and a second duct 54. The outside air from the outside 55 is introduced into the utilization unit 302 through a third duct 56 and an outside air damper 57.

The utilization unit 302 includes an RA fan 51, an SA fan 63, a total heat exchanger 52, and the utilization heat exchanger 5. The RA fan 51 is a fan to return air (RA) from the room 66 to the utilization unit 302. The SA fan 63 is a fan to supply air (SA) from the utilization unit 302 into the room 66. The total heat exchanger 52 is a heat exchanger exchanging heat between the return air from the room 66 and the outside air from the outside 55.

The utilization heat exchanger 5 is, for example, a fin- and-tube heat exchanger. The utilization heat exchanger 5 exchanges heat between the water of the above-described water circuit 401 and the air of the air circuit 402. In other words, the utilization heat exchanger 5 is a heat exchanger to exchange heat between the air and the water heated or cooled by the heat source unit 301. The air heat-exchanged by the utilization heat exchanger 5 is the return air from the bypass duct 59 and the outside air that is introduced from the outside 55 and passes through the total heat exchanger 52.

The utilization unit 302 further includes a first filter 58 and a second filter 61. The first filter 58 and the second filter 61 remove foreign matters and the like from the passing air. The first filter 58 and the second filter 61 are both provided in the air passage to supply the outside air from the outside 55 into the room 66. The first filter 58 is provided on an upstream of the total heat exchanger 52. The second filter 61 is provided on an upstream of the utilization heat exchanger 5.

The air circuit 402 of the water air conditioning system 100 includes a first air temperature sensor 251, a second air temperature sensor 253, and a third air temperature sensor 255. The first air temperature sensor 251 detects a temperature of the return air that is taken from the room 66 into the utilization unit 302 through the first duct 19. The second air temperature sensor 253 detects a temperature of the outside air that is supplied from the outside 55 to the utilization unit 302 through the third duct 56. The third air temperature sensor 255 detects a temperature of the supply air that is supplied from the utilization unit 302 into the room 66 through the fourth duct 65.

The air circuit 402 of the water air conditioning system 100 further includes a carbon dioxide sensor 252 and an air volume sensor 254. The carbon dioxide sensor 252 detects a carbon dioxide concentration of the return air that is taken from the room 66 into the utilization unit 302 through the first duct 19. The air volume sensor 254 detects an air volume of the supply air that is supplied from the utilization unit 302 into the room 66 through the fourth duct 65. In other words, the air volume sensor 254 detects an air circuit airflow volume that is the volume of the air blown off from the SA fan 63.

In the water air conditioning system 100 having the above-described configuration, when the opening degrees of the return air damper 20, the discharge air damper 53, the outside air damper 57, the bypass damper 60, and the damper of the VAV unit 64, and the rotation speeds of the RA fan 51 and the SA fan 63 are varied, the airflow volume of the air passing through the utilization heat exchanger 5 of the air circuit 402 is changed. In other words, the return air damper 20, the discharge air damper 53, the outside air damper 57, the bypass damper 60, the damper of the VAV unit 64, the RA fan 51, and the SA fan 63 constitute airflow volume changing means to change the airflow volume of the air passing through the utilization heat exchanger 5.

Conversely, in the configuration example described here, the airflow volume changing means includes a fan blowing air to the utilization heat exchanger 5. The airflow volume changing means changes the airflow volume of the air passing through the utilization heat exchanger 5 by varying the rotation speed of the fan. The airflow volume changing means further includes a damper provided in an air passage through which the air passing through the utilization heat exchanger 5 flows. The airflow volume changing means changes the airflow volume of the air passing through the utilization heat exchanger 5 by varying an opening degree of the damper.

Although the configuration example in which the airflow volume changing means includes both of the fan and the damper is described, it is sufficient for the airflow volume changing means to include at least one of the fan and the damper. Further, all of the opening degrees of the return air damper 20, the discharge air damper 53, the outside air damper 57, the bypass damper 60, and the damper of the VAV unit 64 are not necessarily variable, and some of them may be fixed to respective preset opening degrees.

As described above, the outside air is introduced from the outside 55 into the utilization unit 302 through the third duct 56 and the outside air damper 57. The third duct 56 and the outside air damper 57 constitute outside air introduction means to introduce the outside air into the air passing through the utilization heat exchanger 5.

As illustrated in Fig. 1, the water air conditioning system 100 includes a system control apparatus 303. The system control apparatus 303 controls the entire operation of the water air conditioning system 100. The system control apparatus 303 includes, for example, a microcomputer. The system control apparatus 303 may be mounted on, for example, a part of a central monitoring system that displays an operation state of a device installed in the building and checks presence/absence of abnormality. A building manager can monitor the operation state of the water air conditioning system 100 through the system control apparatus 303. In a case of a small-scale building, the system control apparatus 303 may be mounted on a desktop PC placed in a staff room. Alternatively, to enable an external maintenance agent to freely use the system control apparatus 303 in periodic maintenance, the system control apparatus 303 may be mounted on a laptop PC or a tablet PC.

The water air conditioning system 100 further includes a first utilization control apparatus 313A and a second utilization control apparatus 313B. The first utilization control apparatus 313A controls operation of the first utilization unit 302A. The second utilization control apparatus 313B controls operation of the second utilization unit 302B. In the following description, in a case where the first utilization control apparatus 313A and the second utilization control apparatus 313B are not distinguished from each other, the first utilization control apparatus 313A and the second utilization control apparatus 313B are collectively referred to as "utilization control apparatus 313". The utilization control apparatus 313 controls operation of the utilization unit 302.

Next, a functional configuration of the control system of the water air conditioning system 100 including the system control apparatus 303 and the utilization control apparatus 313 is described with reference to Fig. 3. As illustrated in the same drawing, the system control apparatus 303 includes a system measurement unit 102, a system calculation unit 103, a system control unit 104, a system storage unit 105, and a system communication unit 106. The system control apparatus 303 receives detection signals output from the differential pressure gauge 201, the flowmeter 202, and the water temperature sensor 205. The system measurement unit 102 acquires measurement values of the water supply differential pressure, the load flow rate, and the temperature of the water heated or cooled by the heat source unit 301, based on the detection signals input from the gauge, the meter, and the sensor. The system storage unit 105 includes, for example, a semiconductor memory. The system storage unit 105 stores various kinds of data, for example, set values necessary for control of the water air conditioning system 100, and device control target values.

The system calculation unit 103 calculates various control parameters including airflow-related control values based on the measurement values acquired by the system measurement unit 102 and the various kinds of data stored in the system storage unit 105. The system control unit 104 controls operation of the devices such as the secondary pump 1, the bypass valve 2, the electric two-way valve 6, the primary pump 9, and the heat source unit 301, based on the control parameters calculated by the system calculation unit 103.

The utilization control apparatus 313 includes a utilization measurement unit 112, a utilization calculation unit 113, a utilization control unit 114, a utilization storage unit 115, and a utilization communication unit 116. The utilization control apparatus 313 receives detection signals output from the first air temperature sensor 251, the second air temperature sensor 253, the third air temperature sensor 255, the carbon dioxide sensor 252, and the air volume sensor 254. The utilization measurement unit 112 acquires measurement values of the temperature of the return air, the temperature of the outside air, the temperature of the supply air, the carbon dioxide concentration of the return air, and the air volume of the supply air, based on the detection signals input from these sensors. The utilization storage unit 115 includes, for example, a semiconductor memory. The utilization storage unit 115 stores various kinds of data such as set values necessary for control of the utilization unit 302, and apparatus control target values.

The utilization calculation unit 113 calculates various control parameters including airflow-related control values, based on the measurement values acquired by the utilization measurement unit 112 and the various kinds of data stored in the utilization storage unit 115. The utilization control unit 114 controls operation of the devices such as the RA fan 51, the SA fan 63, and the VAV unit 64 based on the control parameters calculated by the utilization calculation unit 113.

The system control apparatus 303 and the utilization control apparatus 313 can bidirectionally transmit/receive various kinds of information through the system communication unit 106 and the utilization communication unit 116. A communication method at this time may be a wired method or a wireless method. For example, the system control apparatus 303 can transmit the measurement values of the water supply differential pressure, the load flow rate, and the temperature of the water heated or cooled by the heat source unit 301, acquired by the system measurement unit 102, to the utilization control apparatuses 313. In this case, the utilization control apparatus 313 can control operation of the devices such as the RA fan 51, the SA fan 63, and the VAV unit 64 based on these measurement values.

Further, the utilization control apparatus 313 can transmit the measurement values of the temperature of the return air, the temperature of the outside air, the temperature of the supply air, the carbon dioxide concentration of the return air, and the air volume of the supply air acquired by the utilization measurement unit 112, to the system control apparatus 303. In this case, the system control apparatus 303 can control operation of the devices such as the secondary pump 1, the bypass valve 2, the electric two-way valve 6, the primary pump 9, and the heat source unit 301, based on these measurement values.

Alternatively, the system control apparatus 303 may calculate the control parameters for the devices to be controlled by the utilization control apparatus 313, and transmit the calculated control parameters to the utilization control apparatus 313. In contrast, the utilization control apparatus 313 may calculate the control parameters for the devices to be controlled by the system control apparatus 303, and transmit the calculated control parameters to the system control apparatus 303.

Next, the operation of the water air conditioning system 100 having the above-described configuration is described by taking cold water operation as an example. The cold water operation is started in a case where one or more utilization units 302 perform cooling operation. The operation state in a case where the first utilization unit 302A performs the cold water operation and the second utilization unit 302B is stopped is described.

First, operation in the water circuit 401 is described. The water (heat medium) sent by the primary pump 9 is cooled by the heat source unit 301. The cooled water flows to the first outgoing header 14, and is divided into the water flowing toward the bypass pipe 10 and the water flowing toward the secondary pump 1. The water flowing through the secondary pump 1 is sent from the secondary pump 1, and is then divided by the second outgoing header 15 into the water flowing toward the bypass valve 2 and the water flowing toward the first utilization pipe 4A and the second utilization pipe 4B. The water flowing toward the bypass valve 2 passes through the bypass valve 2, and then merges with the water flowing through the first outgoing header 14.

On the other hand, the water flowing through the first utilization pipe 4A and the second utilization pipe 4B cools the air of the air circuit 402 in the respective utilization heat exchangers 5. The water passing through the utilization heat exchanger 5 passes through the electric two-way valve 6, and then passes through the third utilization pipe 7A or the fourth utilization pipe 7B. Thereafter, the water merges with the water flowing through the bypass pipe 10 in the returning header 16. The water then flows to the primary pump 9. As a result, the water circulates through the water circuit 401.

Next, operation in the air circuit 402 is described. The air from the room 66 supplied by the RA fan 51 is divided into the air flowing toward the total heat exchanger 52 and the air flowing toward the bypass duct 59. The return air flowing through the bypass duct 59 passes through the bypass damper 60, and then merges with the outside air passing through the total heat exchanger 52. On the other hand, the indoor air flowing toward the total heat exchanger 52 exchanges heat with the outside air in the total heat exchanger 52, and then flows out from the utilization unit 302. The indoor air flowing out from the utilization unit 302 passes through the discharge air damper 53 and the second duct 54, and is then discharged to the outside 55.

The air of the outside 55 flows into the utilization unit 302 through the third duct 56 and the outside air damper 57. The outside air flowing into the utilization unit 302 passes through the first filter 58, and exchanges heat with the indoor air passing through the RA fan 51, in the total heat exchanger 52. Thereafter, the outside air merges with the return air passing through the bypass damper 60. Thereafter, the air passes through the second filter 61, and is cooled by the water of the water circuit 401 in the utilization heat exchanger 5, thereby becoming cold air. The cold air then flows out from the utilization unit 302 through the SA fan 63, and is supplied as the cold air into the room 66 through the VAV unit 64 and the fourth duct 65. The air circulating in the room 66 flows into the RA fan 51 again through the first duct 19 and the return air damper 20.

During the above-described cold water operation, the system control apparatus 303 controls the operation of the heat source unit 301 such that the water temperature detected by the water temperature sensor 205 is equal to a set water temperature (for example, 7°C) . Further, the system control apparatus 303 controls the rotation speed of the secondary pump 1 and the opening degree of the bypass valve 2 such that the water supply differential pressure between the second outgoing header 15 and the first outgoing header 14, detected by the differential pressure gauge 201, is equal to a target water supply differential pressure value (for example, 200 kPa). Furthermore, the system control apparatus 303 controls the opening degree of the first electric two-way valve 6A such that the temperature of the return air detected by the first air temperature sensor 251 is equal to a set indoor temperature. Note that, since the second utilization unit 302B is stopped, the system control apparatus 303 controls the opening degree of the second electric two-way valve 6B to a fully-closed opening degree (for example, opening degree of 0%). Further, the rotation speed of the primary pump 9 may be constant (fixed) irrespective of the operation state.

In the water air conditioning system 100 according to the present embodiment, the system control apparatus 303 and the utilization control apparatus 313 control the rotation speeds of the RA fan 51 and the SA fan 63 based on a set outlet water temperature of the heat source unit 301. The set outlet water temperature of the heat source unit 301 is a set value of the temperature of the water (heat medium) cooled by the heat source unit 301. Note that the rotation speed of the RA fan 51 and the rotation speed of the SA fan 63 are, for example, equal to each other.

In particular, the system control apparatus 303 and the utilization control apparatus 313 increase the rotation speeds of the RA fan 51 and the SA fan 63 as the set outlet water temperature of the heat source unit 301 is higher. In other words, the above-described airflow volume changing means increases the airflow volume of the air passing through the utilization heat exchanger 5 as the temperature of the heat medium (water) cooled by the heat source unit 301 is higher. Note that the system control apparatus 303 and the utilization control apparatus 313 may change the airflow volume of the air passing through the utilization heat exchanger 5 by varying not the rotation speeds of the RA fan 51 and the SA fan 63 but the opening degrees of the return air damper 20, the discharge air damper 53, the outside air damper 57, the bypass damper 60, and the damper of the VAV unit 64.

Advantages by such control are described with reference to Fig. 4 to Fig. 7. First, Fig. 4 illustrates relationship of the set outlet water temperature of the heat source unit 301 with power consumptions of the heat source unit 301 and the secondary pump 1. During the cold water operation, when the set outlet water temperature of the heat source unit 301 is increased, the power consumption of the heat source unit 301 is reduced. On the other hand, the electric two-way valve 6 is adjusted such that the temperature of the return air from the room 66 is equal to the set temperature. In other words, the cooling capacity is controlled to be constant. Therefore, when the set outlet water temperature is increased, the electric two-way valve 6 is opened so as to increase the flow rate of the water passing through the utilization heat exchanger 5 of the utilization unit 302. Accordingly, as illustrated in the same drawing, when the set outlet water temperature of the heat source unit 301 is increased, the water supply flow rate of the secondary pump 1 is increased, and the power consumption of the secondary pump 1 is increased. As a result, as illustrated in Fig. 5, a local minimum value is present in a total power consumption of the heat source unit 301 and the secondary pump 1, relative to the set outlet water temperature of the heat source unit 301.

Fig. 6 illustrates relationship of the flow volumes of the RA fan 51 and the SA fan 63 with the total power consumption of the RA fan 51 and the SA fan 63, and the power consumption of the secondary pump 1. As illustrated in the same drawing, the total power consumption of the RA fan 51 and the SA fan 63 is increased as the flow volumes of the RA fan 51 and the SA fan 63 are increased. On the other hand, the electric two-way valve 6 is adjusted such that the temperature of the return air from the room 66 is equal to the set temperature. In other words, the cooling capacity is controlled to be constant. Therefore, when the flow volumes of the RA fan 51 and the SA fan 63 are increased, the electric two-way valve 6 is closed so as to reduce the flow rate of the water passing through the utilization heat exchanger 5 of the utilization unit 302. Accordingly, as illustrated in the same drawing, when the air volumes of the RA fan 51 and the SA fan 63 are increased, the water supply flow rate of the secondary pump 1 is reduced, and the power consumption of the secondary pump 1 is reduced. As a result, as illustrated in Fig. 7, a local minimum value is present in the total of the power consumptions of the RA fan 51 and the SA fan 63 and the power consumption of the secondary pump 1, relative to the air volumes of the RA fan 51 and the SA fan 63.

Further, as described above, when the set outlet water temperature of the heat source unit 301 is increased, the water supply flow rate of the secondary pump 1 is increased, and the power consumption of the secondary pump 1 is increased. Therefore, as illustrated in Fig. 6, a graph representing the power consumption of the secondary pump 1 in the case where the set outlet water temperature of the heat source unit 301 is high is relatively positioned right above a graph representing the power consumption of the secondary pump 1 in the case where the set outlet water temperature of the heat source unit 301 is low. As a result, as illustrated in Fig. 7, the local minimum value of the total of the power consumptions of the RA fan 51 and the SA fan 63 and the power consumption of the secondary pump 1 moves to the high air volume side (right side in graph) when the set outlet water temperature of the heat source unit 301 is increased.

Accordingly, when the set outlet water temperature of the heat source unit 301, namely, the temperature of the water cooled by the heat source unit 301 is increased, the local minimum value of the total of the power consumptions of the heat source unit 301, the RA fan 51, the SA fan 63, and the secondary pump 1 can be realized by increasing the air volume, namely, the rotation speeds of the RA fan 51 and the SA fan 63. In the water air conditioning system 100 according to the present embodiment, the airflow volume of the air passing through the utilization heat exchanger 5 is increased when the set outlet water temperature of the heat source unit 301, namely, the temperature of the water cooled by the heat source unit 301 is higher, based on characteristics of the local minimum value of the total power consumption. This makes it possible to reduce the power consumption of the water air conditioning system 100 while maintaining the constant cooling capacity.

The cold water operation when the utilization unit 302 performs the cooling operation is described above as the example. When one or more utilization units 302 perform heating operation, the water air conditioning system 100 performs hot water operation in which the heat source unit 301 heats the water. During such hot water operation, the water air conditioning system 100 according to the present embodiment can reduce the power consumption while maintaining constant heating capacity in the following manner. In other words, the above-described airflow volume changing means (return air damper 20, discharge air damper 53, outside air damper 57, bypass damper 60, damper of VAV unit 64, RA fan 51, and SA fan 63) increases the airflow volume of the air passing through the utilization heat exchanger 5 as the set outlet water temperature of the heat source unit 301, namely, the temperature of the water heated by the heat source unit 301 is lower.

During the hot water operation, in contrast to the above-described cold water operation, the local minimum value in the total of the power consumptions of the RA fan 51 and the SA fan 63 and the power consumption of the secondary pump 1 moves to the high air volume side when the set outlet water temperature of the heat source unit 301 is decreased. Therefore, during the hot water operation, it is possible to realize the local minimum value in the total power consumption of the heat source unit 301, the RA fan 51, the SA fan 63, and the secondary pump 1 by increasing the air volumes (rotation speeds) of the RA fan 51 and the SA fan 63 as the set outlet water temperature of the heat source unit 301, namely, the temperature of the water heated by the heat source unit 301 is lower.

The power consumption of the secondary pump 1 has characteristics of being increased with up to the cube of the operation frequency of the secondary pump 1. For example, when the operation frequency of the secondary pump 1 can be suppressed from 100% to 79% of the maximum capacity, the power consumption of the secondary pump 1 can be reduced up to 49% (= 0.79^3) of rated power. In addition, the power consumption of each of the RA fan 51 and the SA fan 63 has characteristics of being increased with the cube of the operation frequency (rotation speed) of each of the RA fan 51 and the SA fan 63. For example, when the rotation speed of each of the RA fan 51 and the SA fan 63 can be suppressed from 100% to 79% of the operation capacity, the power consumption of each of the RA fan 51 and the SA fan 63 can be reduced to 49% of the rated power.

Accordingly, the total power-consumption reduction effect is high in the case where the power of the secondary pump 1 and the power of the RA fan 51 and the SA fan 63 are both averagely reduced, as compared with the case where one of the power of the secondary pump 1 and the power of the RA fan 51 and the SA fan 63 is extremely reduced. For example, in a case where the fan operation capacity/the pump operation capacity are 79%/79% of the maximum capacity, the fan power/the pump power are 49%/49% at minimum. In contrast, in a case where the fan operation capacity/the pump operation capacity are 58% (reduced capacity 21% × 2)/100% of the maximum capacity, the fan power/the pump power are 19%/100%. Accordingly, when the rated power consumption of the fans and the rated power consumption of the pump are equivalent to each other, the power reduction amount can be increased by averagely reducing the operation capacities of the fans and the pump in some cases.

Therefore, the above-described airflow volume changing means preferably changes the airflow volume of the air passing through the utilization heat exchanger 5 so as to minimize the total operation capacity of the RA fan 51, the SA fan 63, and the secondary pump 1 in at least two cases including a case where the temperature of the heat medium (water) cooled by the heat source unit 301 is a first temperature and a case where the temperature of the heat medium (water) cooled by the heat source unit 301 is a second temperature. At this time, the second temperature is a temperature different from the first temperature. This makes it possible to reduce the total power consumption of the RA fan 51, the SA fan 63, and the secondary pump 1 (hatched area of graph in Fig. 8).

Further, the above-described airflow volume changing means preferably changes the airflow volume of the air passing through the utilization heat exchanger 5 while preventing reduction of the outside air introduction amount by the above-described outside air introduction means. This makes it possible to reduce the total power consumption of the RA fan 51, the SA fan 63, and the secondary pump 1, namely, the power consumption of the water air conditioning system 100 while securing the ventilation amount of the room 66 and suppressing increase in the carbon dioxide concentration in the room 66.

More specifically, for example, the utilization control apparatus 313 controls the opening degrees of the discharge air damper 53 and the outside air damper 57 such that the carbon dioxide concentration of the return air from the room 66, detected by the carbon dioxide sensor 252 becomes less than or equal to a preset reference value (for example, 900 ppm). Note that the opening degree of the discharge air damper 53 and the opening degree of the outside air damper 57 are, for example, made equal to each other.

In the case where the plurality of utilization heat exchangers 5 are provided as in the described configuration example, the airflow volume changing means preferably changes the airflow volume of the air passing through each of the plurality of utilization heat exchangers 5 based on the temperature of the heat medium (water) cooled by the heat source unit 301. In the case where the water air conditioning system 100 includes the plurality of utilization heat exchangers 5, namely, the plurality of utilization units 302, it is considered that the utilization units 302 have different specifications (air sending performance, characteristics, and the like). In this case, the airflow volume of the air at which the high power-consumption reduction effect is obtainable may be different among the utilization units 302. Therefore, the airflow volume of the air passing through each of the plurality of utilization heat exchangers 5 is made variable, which makes it possible to realize the airflow volume of the air at which the high power-consumption reduction effect is obtainable in each of the utilization units 302, and to further reduce the power consumption of the water air conditioning system 100.

Next, an example of the operation by the water air conditioning system 100 having the above-described configuration is described with reference to a flowchart in Fig. 9. First, in step S1, the utilization control apparatus 313 starts operation of the utilization unit 302, and the cold water operation of the water air conditioning system 100 is started. In subsequent step S2, the system calculation unit 103 acquires the set outlet water temperature and a load heat quantity of the heat source unit 301, and the current operation state (operation capacities, frequencies, etc. of RA fan 51, SA fan 63, and secondary pump 1), from the system storage unit 105.

In subsequent step S3, the system calculation unit 103 calculates the airflow-related control values so as to realize the airflow volume corresponding to the set outlet water temperature and the load heat quantity acquired in step S2. At this time, the airflow-related control values are the rotation speeds of the RA fan 51 and the SA fan 63, the opening degree of the VAV unit 64, or the like. Thereafter, the utilization control apparatus 313 causes the above-described airflow volume changing means to change the airflow volume of the air passing through the utilization heat exchanger 5 based on the calculated airflow-related control values.

In subsequent step S4, the utilization control apparatus 313 determines whether the carbon dioxide concentration of the return air from the room 66, detected by the carbon dioxide sensor 252 is less than or equal to the preset reference value (for example, 900 ppm) . In a case where the carbon dioxide concentration is less than or equal to the reference value, the series of operation ends. In contrast, in a case where the carbon dioxide concentration is not less than or equal to the reference value, the processing proceeds to step S5, and the utilization control apparatus 313 controls the above-described airflow volume changing means to increase the outside air amount and the discharge air amount of the air circuit 402. After step S5, the processing returns to step S4.

The water air conditioning system 100 according to the present embodiment includes a setting unit 120 as illustrated in Fig. 3. In the illustrated configuration example, the setting unit 120 is provided in the system control apparatus 303. However, the configuration is not limited to the example, and the setting unit 120 may be provided in, for example, the utilization control apparatus 313. The setting unit 120 is setting means to set the rotation speeds of the RA fan 51 and the SA fan 63 corresponding to the temperature of the heat medium (water) cooled by the heat source unit 301 in a state where the heat medium (water) flows through the utilization heat exchanger 5. The setting unit 120 operates the RA fan 51 and the SA fan 63 in a state where the utilization unit 302 operates, namely, in the state where the water flows through the utilization heat exchanger 5, and determines whether the total operation capacity of the RA fan 51, the SA fan 63, and the secondary pump 1 at this time is the minimum value.

In a case where the total operation capacity of the RA fan 51, the SA fan 63, and the secondary pump 1 is not the minimum value, the setting unit 120 changes the rotation speeds of the RA fan 51 and the SA fan 63, and again determines whether the total operation capacity of the RA fan 51, the SA fan 63, and the secondary pump 1 is the minimum value. The setting unit 120 repeatedly changes the rotation speeds of the RA fan 51 and the SA fan 63 in the above-described manner until the total operation capacity of the RA fan 51, the SA fan 63, and the secondary pump 1 becomes the minimum value. When the total operation capacity of the RA fan 51, the SA fan 63, and the secondary pump 1 becomes the minimum value, the rotation speeds of the RA fan 51, the SA fan 63, and the secondary pump 1 at that time are stored as the set values corresponding to the outlet water temperature and the load heat quantity of the heat source unit 301 at that time, in the system storage unit 105.

Next, an example of the operation to set the rotation speeds of the RA fan 51 and the SA fan 63 corresponding to the outlet water temperature of the heat source unit 301, by the setting unit 120 having the above-described configuration is described with reference to Fig. 10. First, in step S21, the utilization control apparatus 313 starts the operation of the utilization unit 302, and the cold water operation of the water air conditioning system 100 is started. At this time, in the case where the water air conditioning system 100 includes the plurality of utilization units 302, operation of all of the plurality of utilization units 302 is started. In other words, the heat medium (water) is caused to flow through all of the plurality of utilization heat exchangers 5.

In subsequent step S22, the system calculation unit 103 acquires, from the system storage unit 105, the set outlet water temperature and the load heat quantity of the heat source unit 301, and the current operation state (operation capacities, frequencies, etc. of RA fan 51, SA fan 63, and secondary pump 1). The system calculation unit 103 calculates the control parameters such that the detected value of the water temperature sensor becomes the acquired set outlet water temperature. Thereafter, the system control unit 104 controls the heat source unit 301 based on the control parameters calculated by the system calculation unit 103.

In subsequent step S23, the utilization control apparatus 313 changes the rotation speeds of the RA fan 51 and the SA fan 63. After the operation state of the water air conditioning system 100 is stabilized, the processing proceeds to step S24. It can be determined whether the operation state of the water air conditioning system 100 has been stabilized, for example, based on whether the detected value of the flowmeter 202 becomes constant and the detected value of the first air temperature sensor 251 or the third air temperature sensor 255 becomes constant.

In step S24, the setting unit 120 determines whether the total operation capacity of the RA fan 51, the SA fan 63, and the secondary pump 1 is the above-described minimum value. In a case where the total operation capacity of the RA fan 51, the SA fan 63, and the secondary pump 1 is not the minimum value, the processing returns to step S23, and the setting unit 120 further changes the rotation speeds of the RA fan 51 and the SA fan 63. In a case where the total operation capacity of the RA fan 51, the SA fan 63, and the secondary pump 1 becomes the minimum value in step S24, the rotation speeds of the RA fan 51, the SA fan 63, and the secondary pump 1 at that time are stored as the set values corresponding to the outlet water temperature and the load heat quantity of the heat source unit 301 at that time, in the system storage unit 105. The series of setting operation then ends.

When the rotation speeds of the fans are changed for the first time in step S23, for example, the rotation speeds of the fans are each changed by +1 Hz and -1 Hz from the current frequency, to find a direction in which the total capacity is reduced (plus direction or minus direction). Further, the frequencies of the fans are sequentially changed in the found direction, to find the frequencies at which the total capacity becomes the minimum value.

In the case where the plurality of utilization units 302 is provided, the processing in step S23 and step S24 are individually performed on all of the utilization units 302. This is because the rotation speeds of the fans settable in each of the utilization units 302 are different depending on the specification of each of the utilization units 302. This makes it possible to realize the air flow volume of the air at which the high power-consumption reduction effect is obtainable in each of the utilization units 302.

For example, in a case where the first utilization unit 302A is installed on an interior side of a space, the second utilization unit 302B is installed on a perimeter side of the same space, and the air conditioning load on the second utilization unit 302B is lower than the air conditioning load on the first utilization unit 302A, the airflow volume of the second utilization unit 302B is constantly set to a value lower by 5% than the airflow volume of the first utilization unit 302A. This is applicable to a case where the first utilization unit 302A is installed in a large meeting room with high air conditioning load and the second utilization unit 302B is installed in a small meeting room with a low air conditioning load. Further, in a case where three or more utilization units 302 are provided, the airflow volume of the corresponding air circuit 402 is made lower than the airflow volume of the air circuit 402 corresponding to the utilization unit 302 with the maximum load, based on air conditioning load design.

More specifically, for example, in a case where the set outlet water temperature of the heat source unit 301 is 7°C that is a low water temperature, the power consumption of the pump (water circuit 401) and the fan (air circuit 402) is minimized when the airflow volume of the first utilization unit 302A is 68% and the airflow volume of the second utilization unit 302B is 63%. In contrast, in a case where the set outlet water temperature of the heat source unit 301 is 10°C that is a high water temperature, the power consumption of the pump (water circuit 401) and the fan (air circuit 402) is minimized when the airflow volume of the first utilization unit 302A is 95% and the airflow volume of the second utilization unit 302B is 90%.

Further, for example, in a case where the set outlet water temperature of the heat source unit 301 is 8°C, the airflow volume of the first utilization unit 302A is 75% and the airflow volume of the second utilization unit 302B is 70%. In a case where the set outlet water temperature of the heat source unit 301 is 9°C, the airflow volume of the first utilization unit 302A is 85% and the airflow volume of the second utilization unit 302B is 80%.

As described above, in the case where the plurality of utilization units 302 are provided, a standard utilization unit 302 is determined, and the airflow volumes of the other utilization units 302 are determined based on the airflow volume of the standard utilization unit 302, thereby setting the airflow volumes of the plurality of utilization units 302 as a set for each set outlet water temperature of the heat source unit 301. Further, the water flow rate of the water circuit 401 and the airflow volume of the air circuit 402 to reduce the power consumption can be determined based on the relationship between the set outlet water temperature of the heat source unit 301 and the set of the airflow volumes of the plurality of utilization units 302 set in the above-described manner.

The setting of the rotation speeds of the RA fan 51 and the SA fan 63 by the setting unit 120 may be manually performed by a worker during test operation in system construction or during periodic maintenance. Alternatively, a mode may be automatically transited to a "fan operation frequency searching operation mode" and the setting may be performed without requiring operation by the worker or the like. In particular, in a case where the number of utilization units 302 is large, eliminating the need of the operation by the worker or the like enables execution of other works while the setting in addition to reduction of time and effort for setting the rotation speeds of the fans, which improves maintenance efficiency.

Further, as an operation mode of the water air conditioning system 100, a normal operation mode and an energy saving operation mode may be provided. The normal operation mode is an operation mode in which control to realize a constant airflow volume is performed by fixing the rotation speeds of the RA fan 51 and the SA fan 63 as in the existing operation. The energy saving operation mode is an operation mode in which, as described above, control to increase the airflow volume of the air passing through the utilization heat exchanger 5 is performed as the temperature of the water cooled by the heat source unit 301 is higher during the cooling operation, and control to increase the airflow volume of the air passing through the utilization heat exchanger 5 is performed as the temperature of the water heated by the heat source unit 301 is lower during the heating operation. In other words, in this case, the water air conditioning system 100 can perform the energy saving operation mode that is a first operation mode in which the airflow volume of the air passing through the utilization heat exchanger 5 is changed based on the temperature of the water cooled or heated by the heat source unit 301, and the normal operation mode that is a second operation mode in which the airflow volume of the air passing through the utilization heat exchanger 5 is made constant irrespective of the temperature of the water cooled or heated by the heat source unit 301.

Switching of such operation modes is advantageous in realization of both of comfort felt by a person and energy saving. Under an environment condition where a cooling load is high, for example, when outside air temperature is high, to cause a person entering the room 66 from the outside 55 to feel cold air, the operation mode is switched to the normal operation mode to cause the person to strongly feel the cold air, which makes it possible to maintain comfort.

Fig. 11 illustrates another example of the water air conditioning system 100 according to the present disclosure. The configuration illustrated in Fig. 1 is a so-called duplex pump system in which two pumps of the secondary pump 1 and the primary pump 9 are provided for one heat source unit 301. In contrast, a configuration illustrated in Fig. 11 is a so-called single pump system in which one pump of a primary pump 9 is provided for one heat source unit 301. Even in such an example of the water air conditioning system 100, the primary pump 9 is controlled in a manner similar to the secondary pump 1 in the configuration illustrated in Fig. 1, which makes it possible to achieve similar effects.

### Industrial Applicability

The present disclosure is applicable to an air conditioning system including a heat medium circuit through which water as heat medium circulates, and an air circuit through which air to be air-conditioned circulates, the system including a heat source machine to cool the heat medium, a heat exchanger to exchange heat between the air and the heat medium cooled by the heat source machine, and a pump to cause the heat medium to flow in the heat exchanger.

### Reference Signs List

- 1: Secondary pump
- 2: Bypass valve
- 4A: First utilization pipe
- 4B: Second utilization pipe
- 5: Utilization heat exchanger
- 5A: First utilization heat exchanger
- 5B: Second utilization heat exchanger
- 6: Electric two-way valve
- 6A: First electric two-way valve
- 6B: Second electric two-way valve
- 7A: Third utilization pipe
- 7B: Fourth utilization pipe
- 8: Water pipe
- 9: Primary pump
- 10: Bypass pipe
- 14: First outgoing header
- 15: Second outgoing header
- 16: Returning header
- 19: First duct
- 20: Return air damper
- 51: RA fan
- 52: Total heat exchanger
- 53: Discharge air damper
- 54: Second duct
- 55: Outside
- 56: Third duct
- 57: Outside air damper
- 58: First filter
- 59: Bypass duct
- 60: Bypass damper
- 61: Second filter
- 63: SA fan
- 64: VAV unit
- 65: Fourth duct
- 66: Room
- 100: Water air conditioning system
- 102: System measurement unit
- 103: System calculation unit
- 104: System control unit
- 105: System storage unit
- 106: System communication unit
- 112: Utilization measurement unit
- 113: Utilization calculation unit
- 114: Utilization control unit
- 115: Utilization storage unit
- 116: Utilization communication unit
- 120: Setting unit
- 201: Differential pressure gauge
- 202: Flowmeter
- 205: Water temperature sensor
- 251: First air temperature sensor
- 252: Carbon dioxide sensor
- 253: Second air temperature sensor
- 254: Air volume sensor
- 255: Third air temperature sensor
- 301: Heat source unit
- 302: Utilization unit
- 302A: First utilization unit
- 302B: Second utilization unit
- 303: System control apparatus
- 313: Utilization control apparatus
- 313A: First utilization control apparatus
- 313B: Second utilization control apparatus
- 401: Water circuit
- 402: Air circuit

## Claims

1. An air conditioning system comprising:
a heat source machine to cool heat medium;
a heat exchanger to exchange heat between air and the heat medium cooled by the heat source machine;
a pump to cause the heat medium flowing in the heat exchanger;
a temperature sensor to detect a temperature of the heat medium cooled by the heat source machine, and
airflow volume changing means to increase an airflow volume of the air passing through the heat exchanger when the temperature of the heat medium cooled by the heat source machine becomes higher.

2. An air conditioning system comprising:
a heat source machine to heat heat medium;
a heat exchanger to exchange heat between air and the heat medium heated by the heat source machine;
a pump to cause the heat medium flowing in the heat exchanger;
a temperature sensor to detect a temperature of the heat medium heated by the heat source machine, and
airflow volume changing means to increase an airflow volume of the air passing through the heat exchanger when the temperature of the heat medium heated by the heat source machine becomes lower.

3. The air conditioning system according to claim 1 or 2, wherein the airflow volume changing means comprises a fan to blow the air to the heat exchanger, and changes the airflow volume of the air passing through the heat exchanger by changing a rotation speed of the fan.

4. The air conditioning system according to claim 3, further comprising setting means to set the rotation speed of the fan corresponding to the temperature of the heat medium cooled or heated by the heat source machine in a state where the heat medium flows in the heat exchanger.

5. The air conditioning system according to claim 1 or 2, wherein the airflow volume changing means comprises a damper provided in an air passage through which the air passing through the heat exchanger flows, and changes the airflow volume of the air passing through the heat exchanger by changing an opening degree of the damper.

6. The air conditioning system according to any one of claims 1 to 5, further comprising outside air introduction means to introduce outside air into the air passing through the heat exchanger, wherein
the airflow volume changing means changes the air flow volume of the air passing through the heat exchanger while preventing an outside air introduction amount by the outside air introduction means from being reduced.

7. The air conditioning system according to claim 3 or 4, wherein the airflow volume changing means changes the air flow volume of the air passing through the heat exchanger to minimize a total operation capacity of the fan and the pump in at least two cases comprising a case where the temperature of the heat medium cooled or heated by the heat source machine is a first temperature and a case where the temperature of the heat medium cooled or heated by the heat source machine is a second temperature different from the first temperature.

8. The air conditioning system according to any one of claims 1 to 7, wherein
a plurality of the heat exchangers are provided, and
the airflow volume changing means changes the airflow volume of the air passing through each of the plurality of heat exchangers based on the temperature of the heat medium cooled or heated by the heat source machine.

9. The air conditioning system according to any one of claims 1 to 8, wherein the air conditioning system performs a first operation mode in which the airflow volume of the air passing through the heat exchanger is changed based on the temperature of the heat medium cooled or heated by the heat source machine, and a second operation mode in which the airflow volume of the air passing through the heat exchanger is made constant irrespective of the temperature of the heat medium cooled or heated by the heat source machine.
